# EUROPÄISCHE PATENTSCHRIFT

(11) **EP 3 377 360 B1**
(45) Veröffentlichungstag und Bekanntmachung des Hinweises auf die Patenterteilung: **05.01.2022**
(21) Anmeldenummer: 16794631.8
(22) Anmeldetag: 11.11.2016
(51) Int. Cl.: B60K 37/06

(54) **ANZEIGEEINHEIT ZUM ANZEIGEN EINER RESTREICHWEITE IN EINEM KRAFTFAHRZEUG**
DISPLAY UNIT FOR DISPLAYING A REMAINING RANGE IN A MOTOR VEHICLE
UNITÉ D'AFFICHAGE DESTINÉE À AFFICHER UNE AUTONOMIE RESTANTE DANS UN VÉHICULE À MOTEUR

(30) Priorität: 18.11.2015 DE 102015222795
(43) Veröffentlichungstag der Anmeldung: 26.09.2018
(73) Patentinhaber: Bayerische Motoren Werke Aktiengesellschaft, 80809 München (DE)
(72) Erfinder: ZAPRYANOV, Grigor, 85748 Garching (DE); KARAMI-MALAMIRI, Keyvan, 80333 München (DE); MÖLLMANN, Jörg, 81245 München (DE); DAMJANOVIC, Ana, 80933 München (DE)
(86) Internationale Anmeldenummer: PCT/EP2016/077437
(87) Internationale Veröffentlichungsnummer: WO 2017/084978

(56) Entgegenhaltungen:
- WO-A1-2014/033380
- PSA: "Bordcomputer", Bedienungsanleitung Peugoet 508 2011, Bd. AL. 11208.0020 1. Januar 2011 (2011-01-01), Seite 36, 311, XP002767836, Gefunden im Internet: URL:https://carmanuals2.com/d/76193 [gefunden am 2017-03-06]

## Beschreibung

Die Erfindung bezieht sich auf eine Anzeigeeinheit zum Anzeigen zumindest einer Restreichweite in einem Kraftfahrzeug, das beispielsweise ein Kraftfahrzeug mit nur einem Antriebssystem (z. B. mit Verbrennungsmotor oder Elektromotor) aber bevorzugt auch ein Hybridantrieb mit zwei Antriebssystemen (z. B. mit Verbrennungsmotor und Elektromotor) sein kann.

Es ist bereits eine Vielzahl von Verfahren zum Ermitteln und Anzeigen von Restreichweiten in Kraftfahrzeugen, insbesondere auch in Elektrofahrzeugen und/oder Hybridfahrzeugen, bekannt.

Derzeit wird in nahezu jedem Fahrzeug eine Restreichweite (Basis-Restreichweite), die sich aus dem Verhältnis aus aktuellem Tank- bzw. Energiespeicherinhalt zum aktuellen Kraftstoff- bzw. Energieverbrauch ergibt, ermittelt und beispielsweise im Rahmen einer Bordcomputerfunktion oder im Kombiinstrument angezeigt.

Aus der DE 196 12 062 B4 ist eine Anzeigeeinheit für vom Energieverbrauch eines Fahrzeugs abhängige Daten bekannt, wobei anstelle eines Restreichweitenwertes ein Restreichweitenbereich angezeigt wird, der in Abhängigkeit von der im Energiespeicher aktuell enthaltenden Energiemenge unter Berücksichtigung von verschiedenen Fahrweisen und verschiedenen Fahrbedingungen ermittelt wird. Die Grenzen des Bereichs können unter Berücksichtigung von verschiedenen Fahrweisen und verschiedenen Fahrbedingungen eines fahrzeugspezifischen und ggf. eines fahrerspezifischen Verbrauchsspektrums ermittelt werden. Durch ein Auswerten des individuellen Fahrverhaltens des Fahrers über einen bestimmten Zeitraum kann der dargestellte Restreichweitenbereich empirisch angepasst werden.

Beispielsweise aus der DE 10 2009 039 092 A1 ist ein Verfahren zum Ermitteln zumindest zweier verschiedener definierter Restreichweiten derart bekannt, dass durch deren Darstellung für den Fahrer schnell erkennbar ist, ob seine Fahrweise energieeffizient ist oder wie groß die Differenz zwischen seiner Fahrweise und einer energieeffizienten Fahrweise ist.

Zum weiteren Stand der Technik wird auf die "Bedienungsanleitung Peugeot 508 2011", Bd. AL. 11208.0020, 1. Januar 2011, hingewiesen.

Aufgabe der Erfindung ist nun, ein Anzeigesystem zur Anzeige der Restreichweite funktionell zu erweitern.

Diese Aufgabe wird erfindungsgemäß durch die Merkmale des Anspruch 1 gelöst. Vorteilhafte Weiterbildungen sind die Gegenstände der abhängigen Ansprüche.

Die Erfindung ist eine Anzeigeeinheit zum Anzeigen zumindest einer Restreichweite in einem Kraftfahrzeug abhängig vom Energievorrat mindestens eines Antriebssystems (z.B. Tankinhalt bei einem verbrennungsmotorischen Antrieb und/oder Hochvoltbatterieladezustand bei einem elektromotorischen Antrieb), wobei die Darstellung der Restreichweite trotz vorhandenem Energievorrat ausblendbar ist, wenn mindestens eine definierte Betriebsbedingung vorliegt. Vorzugsweise lässt eine definierte Betriebsbedingung zumindest auf eine temporäre Nichtverfügbarkeit eines Aggregats des Antriebssystems (z. B. Antriebssystem mit Elektromotor, Antriebssystem mit Verbrennungsmotor, Antriebssystem mit Brennstoffzelle, usw.) schließen. Möglich wäre erfindungsgemäß beispielsweise aber auch eine definierte Betriebsbedingung, die auf eine dauerhafte Nichtverfügbarkeit bei einem Notlauf oder einem Totalausfalls eines Aggregats schließen lässt.

Grundgedanke der Erfindung ist also, die Anzeige einer Restreichweite auszublenden, solange ein dafür erforderliches Antriebsaggregat nicht oder nur eingeschränkt zur Verfügung steht. Unter dem Begriff "Nichtverfügbarkeit" wird im Folgenden sowohl eine eingeschränkte als auch eine vollständig fehlende Verfügbarkeit verstanden.

Der Erfindung liegen folgende Überlegungen zugrunde:
Üblicherweise berechnet ein Restreichweite-Algorithmus im Fahrzeug auf Basis des aktuellen Füllstands bzw. Energievorrats der jeweiligen Energiequelle eines Antriebssystems die daraus resultierende Restreichweite. Die Energiequelle kann der Kraftstoff eines Kraftstofftanks oder eine Hochvoltbatterie (Füllstand=Ladezustand) sein. Bei einer Kombination von mehreren Energiequellen im Fahrzeug wird bei der Berechnung der Gesamt-Restreichweite grundsätzlich die Summe der einzelnen Restreichweiten gebildet. Die so berechnete (Gesamt-) Restreichweite wird dem Kunden im Kombiinstrument angezeigt. Die Information über die aktuelle Restreichweite im Fahrzeug kann auch über Backend an mobile Endgeräte zur Verfügung gestellt werden.

Die Berechnung der Restreichweite nur auf Basis des aktuellen Füllstands berücksichtigt nicht die Verfügbarkeit der Aggregate des jeweils zugehörigen Antriebssystems.

Ein Aggregat kann ein Verbrennungsmotor, ein Elektromotor und/oder eine Brennstoffzelle sein, die durch Energieumwandlung die Antriebsquelle im Fahrzeug darstellt.

Ein Aggregat kann aus verschiedenen Gründen temporär oder dauerhaft nicht verfügbar sein.

Bei nicht berücksichtigter Aggregatsverfügbarkeit trotz vorhandenem Füllstand bzw. Energievorrat kann das Kraftfahrzeug trotz angezeigter Restreichweite liegen bleiben.

Daher wird erfindungsgemäß eine Ausblendung der Restreichweite vorgesehen, solange das jeweilige Aggregat nicht zur Verfügung steht.

Die Verfügbarkeit eines Aggregats kann beispielsweise durch Fehler oder durch Überschreitung von System- sowie Komponentengrenzen beeinflusst werden.

Beispielsweise ein elektromotorisches Antriebssystem setzt sich üblicherweise aus folgenden Komponenten zusammen: Traktionsmaschine, Hochvoltspeicher, Antriebselektronik.

Dabei können beispielsweise folgende Fehler und/oder Über- oder Unterschreitungen von System- sowie Komponentengrenzen zur temporären oder gar dauerhaften Nichtverfügbarkeit des elektromotorischen Antriebssystems führen:
- Zumindest eingeschränkter Batteriebetrieb aufgrund einiger oder aller defekter Teilspeicheraggregate,
- Sensorausfall,
- Fehler im Elektromotor,
- CAN-Bus-Signalausfälle und/oder
- Minimale bzw. maximale Temperaturgrenzen des Hochvoltspeichers werden unter- bzw. überschritten.

Beispielsweise folgende Fehler und/oder Über- oder Unterschreitungen von System- sowie Komponentengrenzen können zur temporären oder gar dauerhaften Nichtverfügbarkeit eines verbrennungsmotorischen Antriebssystems führen:
- Fehler im Steuergerät oder im Steuer- und Regelablauf des Verbrennungsmotors, z.B. detektiert durch eine geeignete Diagnose, die zur Abweichung vom Regelbetrieb führen,
- Fehler bei der Ladedruckregelung,
- Fehler im Einspritz- und Gemischbildungssystem,
- Fehler im Kühlkreislauf,
- Fehler im Ölhaushalt,
- Fehler im Abgasnachbehandlungssystem,
- Fehler in Nebenaggregaten (z.B. 12V-Generator) oder in diversen Stellgliedern oder Sensoren (z.B. VVT-Stellglied, Kurbelwellendrehzahlsensor usw.).

Erfindungsgemäß wird durch Berücksichtigung der Verfügbarkeit von Antriebsaggregaten verhindert, insbesondere eine zu lange Restreichweite anzuzeigen und den Fahrer in vermeintlicher Sicherheit zu wiegen.

Die Erfindung wird anhand nachfolgender Ausführungsbeispiele näher erläutert. Insbesondere zeigt dabei
- Fig. 1: Restreichweitenanzeigen in einem Kombiinstrument für ein Hybridfahrzeug mit einem elektromotorischen und mit einem verbrennungsmotorischen Antriebssystem,
- Fig. 2: Möglichkeiten einer unterdrückten Restreichweitenanzeige für das elektromotorische Antriebssystem mit gleichzeitiger Zusatzinformation an den Fahrer,
- Fig. 3: Möglichkeit einer unterdrückten Restreichweitenanzeige für das verbrennungsmotorische Antriebssystem und
- Fig. 4: Beispiele der erfindungsgemäßen Anzeige einer Gesamt-Restreichweite auch bei unterschiedlich unterdrückten Einzel-Restreichweiten.

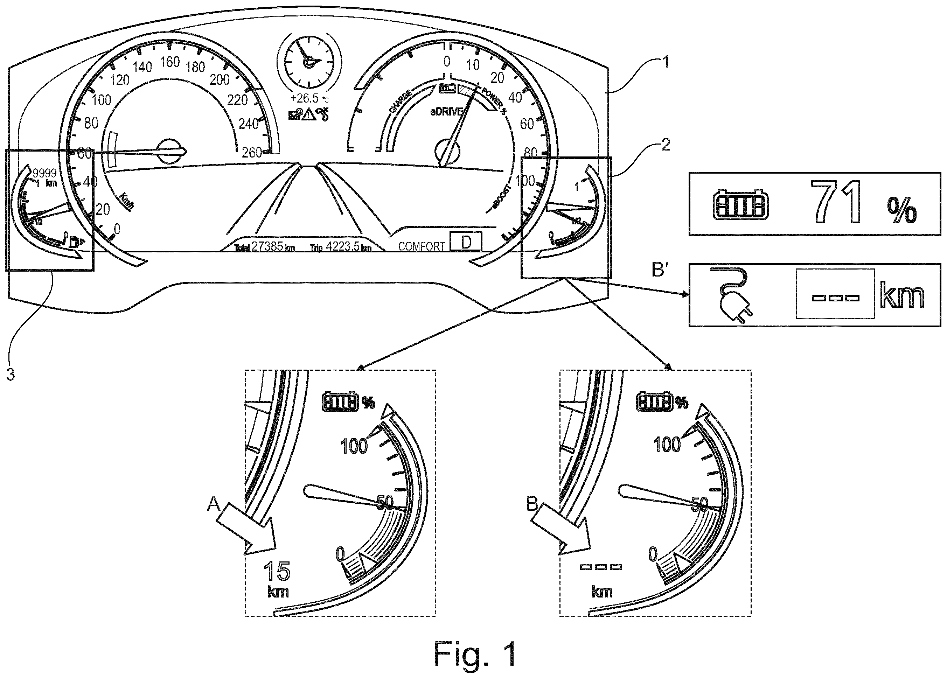

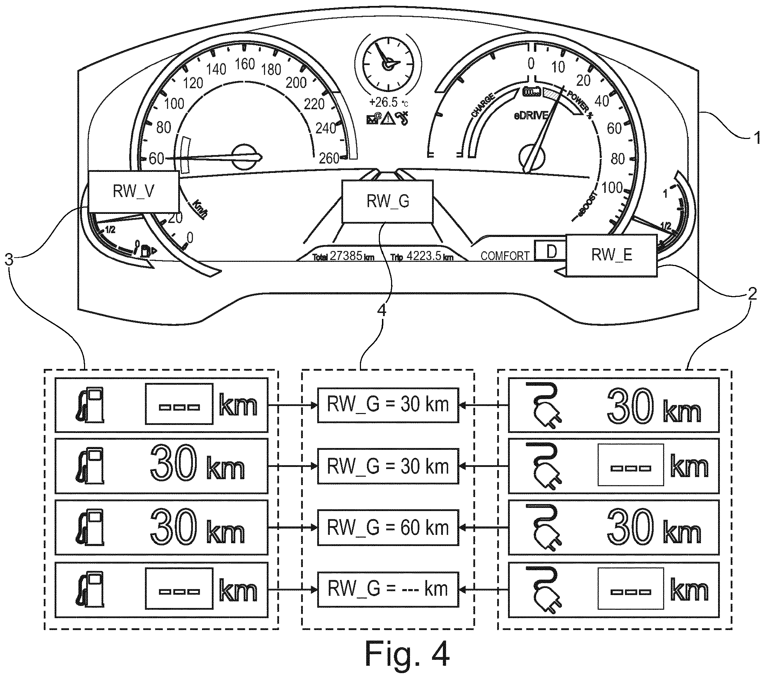

In Fig. 1 sind für ein nicht näher dargestelltes Hybridfahrzeug in einem Kombiinstrument 1 eine Einzel-Anzeigeeinheit 2 für ein elektromotorisches Antriebssystem und eine Einzel-Anzeigeeinheit 3 für ein verbrennungsmotorisches Antriebssystem dargestellt. Die Einzel-Anzeigeeinheit 2 enthält eine bekannte erste Anzeige des Energievorrats in Form eines Ladezustands des Hochvoltspeichers und eine zweite Anzeige A der Restreichweite des elektrischen Antriebssystems (in Fig. 4 mit RW_E bezeichnet). Erfindungsgemäß wird nun, beispielsweise bei Erkennung zumindest einer temporären Nichtverfügbarkeit des Hochvoltspeichers (z.B. bei Überhitzung oder bei noch nicht erreichter minimal nötiger Betriebstemperatur bei kalten Außentemperaturen) die Anzeige A ausgeblendet. Im dargestellten Beispiel wird anstelle der Anzeige A eine Alternativ-Anzeige B - hier drei Striche - eingeblendet (nicht Null). Zusätzlich oder alternativ zur Anzeige B kann eine Anzeige B' im Kombiinstrument 1 ausgegeben werden. Gleichzeitig kann aber die Anzeige des Energievorrats, hier noch 70% der Batterieladung, unverändert angezeigt bleiben. Sie kann aber optional auch ausgeblendet, ausgegraut oder durch eine Zusatzanzeige kommentiert werden.

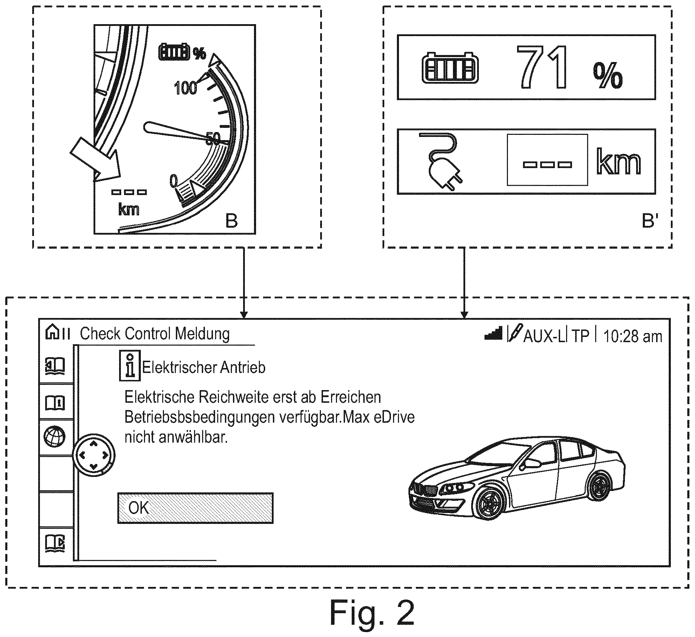

In Fig. 2 wird dargestellt, dass an den Fahrer zusätzlich zur Ausblendung einer Restreichweitenanzeige - hier der Restreichweitenanzeige RW_E - in einem weiteren Display (bei BMW z.B. das Display für Check-Control Meldungen) eine Information über den Grund der Ausblendung anzeigbar ist.

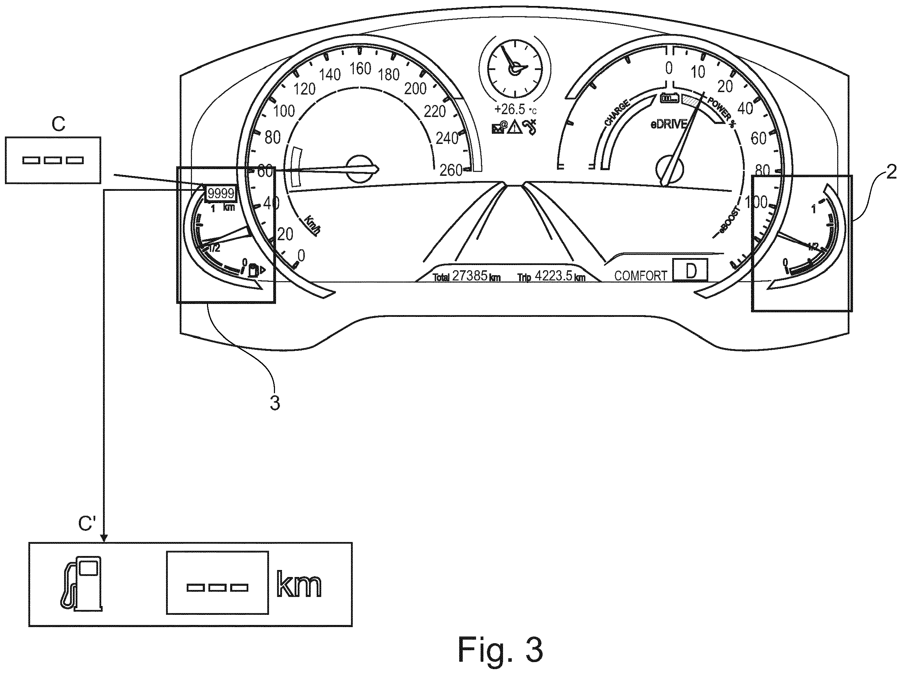

Fig. 3 zeigt analog zum Ausführungsbeispiel nach Fig. 1 die Ausblendung der Restreichweite (hier symbolisch "9999" km) für das verbrennungsmotorische Antriebssystem (in Fig. 4 mit RW_V bezeichnet). Es wird hier beispielsweise eine Alternativ-Anzeige C und/oder C' ausgegeben. Der aktuelle Energievorrat hier in Form des Tankinhalts wird weiterhin angezeigt.

In Fig. 4 ist eine gesamte Anzeigeeinheit bestehend aus dem Kombiinstrument 1, aus den Einzel-Anzeigeeinheiten 2 und 3 für die Einzel-Restreichweiten RW_E und RW_V sowie aus einer zusätzlichen (ggf. nur auf Abruf anzeigbaren) Teilanzeigeeinheit 4 für die Gesamt-Restreichweite RW_G dargestellt.

Anhand von vier Beispielen wird gezeigt, dass die Gesamt-Restreichweite RW_G jeweils aus der Summe der nicht ausgeblendeten Anzeigen im Hinblick auf die Einzel-Restreichweiten RW_V und RW_E gebildet wird. Da hier nur zwei Antriebseinheiten vorhanden sind bedeutet dies im Einzelnen:
Wird die Restreichweite RW_V ausgeblendet, zeigt die Gesamt-Restreichweite RW_G nur die Restreichweite RW_E an.
Wird die Restreichweite RW_E ausgeblendet, zeigt die Gesamt-Restreichweite RW_G nur die Restreichweite RW_V an.
Wird keine der Restreichweiten RW_V und RW_E ausgeblendet, zeigt die Gesamt-Restreichweite RW_G die Summe der Einzel- Restreichweiten RW_V und RW_E an.
Werden beide Restreichweite RW_V ausgeblendet, wird auch die Gesamt-Restreichweite RW_G ausgeblendet.

Im vorliegenden Fall werden die Energievorräte - hier also die Tankanzeige und der Batterieladezustand - weiterhin als gültig angezeigt.

Die Steuerung der Anzeigeeinheit, hier des Kombiinstruments 1 mit den Einzel-Anzeigeeinheiten 2 und 3 sowie mit der Teilanzeigeeinheit 4 für die Gesamt-Restreichweite RW_G, wird durch eine hier nicht näher dargestellte elektronische Steuereinheit durchgeführt, die hierfür ein entsprechendes Programmmodul enthält. Grundsätzlich sind elektronische Steuereinheiten vielfach bekannt.

Ergänzend wird daraufhin gewiesen, dass in einer Weiterbildung der Erfindung bei ausgeblendeter Restreichweite RW_E für den elektromotorischen Antrieb weitere Antriebsstrategien aktivierbar sind; z.B.
- ein möglicherweise willkürlich aktivierbarer Modus zum Fahren mit maximaler elektrischer Energie (bei BMW z.B. MAXeDrive) wird verboten und/oder
- es wird automatisch auf einen möglichst energiesparenden Antriebs-Modus gewechselt.

## Patentansprüche

1. Anzeigeeinheit (1; 2; 3; 4) mit einer elektronischen Steuereinheit zum Anzeigen zumindest einer Restreichweite (RW_E, RW_V, RW_G) in einem Kraftfahrzeug abhängig vom Energievorrat mindestens eines Antriebssystems, die Anzeigeeinheit ist **dadurch gekennzeichnet, dass** die Steuereinheit derart ausgestaltet ist, dass die Anzeige der Restreichweite (RW_E, RW_V; RW_G) trotz vorhandenem Energievorrat ausgeblendet wird, wenn mindestens eine definierte Betriebsbedingung vorliegt, und dass durch Abprüfen der definierten Betriebsbedingung zumindest eine temporäre Nichtverfügbarkeit eines Aggregats des Antriebssystems erkannt wird.

2. Anzeigeeinheit (1; 2; 3) nach Anspruch 1, **dadurch gekennzeichnet, dass** die Steuereinheit derart ausgestaltet ist, dass in einem Kraftfahrzeug mit einem elektromotorischen Antriebssystem die Restreichweite (RW_E) unabhängig vom elektrischen Energievorrat ausgeblendet wird, wenn eine definierte Betriebsbedingung vorliegt, die zumindest auf eine temporäre Nichtverfügbarkeit des Hochvoltspeichers schließen lässt.

3. Anzeigeeinheit (1; 2; 3) nach einem der vorangegangenen Ansprüche, **dadurch gekennzeichnet, dass** die Steuereinheit derart ausgestaltet ist, dass in einem Kraftfahrzeug mit einem verbrennungsmotorischen Antriebssystem die Restreichweite (RW_V) unabhängig vom kraftstoffbezogenen Energievorrat ausgeblendet wird, wenn eine definierte Betriebsbedingung vorliegt, die zumindest auf eine temporäre Nichtverfügbarkeit eines Aggregats des verbrennungsmotorischen Antriebssystems schließen lässt.

4. Anzeigeeinheit (1; 2; 3) nach einem der vorangegangenen Ansprüche, **dadurch gekennzeichnet, dass** die Steuereinheit derart ausgestaltet ist, dass in einem Kraftfahrzeug mit einem Brennstoffzellen-Antriebssystem die Restreichweite unabhängig vom brennstoffzellenbezogenen Energievorrat ausgeblendet wird, wenn eine definierte Betriebsbedingung vorliegt, die zumindest auf eine temporäre Nichtverfügbarkeit eines Aggregats des Brennstoffzellen-Antriebssystems schließen lässt.

5. Anzeigeeinheit (1; 2; 3) nach einem der vorangegangenen Ansprüche, **dadurch gekennzeichnet, dass** die Steuereinheit derart ausgestaltet ist, dass in einem Kraftfahrzeug mit mindestens zwei Antriebssystemen sowohl jede Einzel-Restreichweite (RW_E, RW_V) jedes Antriebssystems als auch die Gesamt-Restreichweite (RW_G) angezeigt wird und dass als Gesamt-Restreichweite (RW_G) die Summe der nicht ausgeblendeten Einzel- Restreichweiten (RW_E, RW_V) vorgegeben wird.

## Claims

1. Display unit (1; 2; 3; 4) with an electronic control unit for displaying at least one remaining range (RW_E, RW_V, RW_G) in a motor vehicle as a function of stored energy of at least one drive system, wherein the display unit is **characterized in that** the control unit is designed such that the display of the remaining range (RW_E, RW_V; RW_G) is suppressed despite there being stored energy if at least one defined operating condition exists and **in that** at least temporary unavailability of a unit of the drive system is detected by checking the defined operating condition.

2. Display unit (1; 2; 3) according to Claim 1, **characterized in that** the control unit is designed such that, in a motor vehicle with an electric motor drive system, the remaining range (RW_E) is suppressed independently of the stored electrical energy if a defined operating condition exists that indicates at least temporary unavailability of the high-voltage storage device.

3. Display unit (1; 2; 3) according to one of the preceding claims, **characterized in that** the control unit is designed such that, in a motor vehicle with an internal combustion engine drive system, the remaining range (RW_V) is suppressed independently of the fuel-related stored energy if a defined operating condition exists that indicates at least temporary unavailability of a unit of the internal combustion engine drive system.

4. Display unit (1; 2; 3) according to one of the preceding claims, **characterized in that** the control unit is designed such that, in a motor vehicle with a fuel cell drive system, the remaining range is suppressed independently of fuel cell-related stored energy if a defined operating condition exists that indicates at least temporary unavailability of a unit of the fuel cell drive system.

5. Display unit (1; 2; 3) according to one of the preceding claims, **characterized in that** the control unit is designed such that, in a motor vehicle with at least two drive systems, both each individual remaining range (RW_E, RW_V) of each drive system and the total remaining range (RW_G) are displayed and that the sum of the non-suppressed individual remaining ranges (RW_E, RW_V) is specified as the total remaining range (RW_G).

## Revendications

1. Unité d'affichage (1 ; 2 ; 3 ; 4) dotée d'une unité de commande électronique et permettant d'afficher au moins une autonomie restante (RW_E, RW_V, RW_G) dans un véhicule automobile en fonction de la réserve d'énergie d'au moins un système d'entraînement, l'unité d'affichage étant **caractérisée en ce que** l'unité de commande est configurée de telle sorte que l'affichage de l'autonomie restante (RW_E, RW_V ; RW_G) est masqué malgré une réserve d'énergie existante si au moins une condition de fonctionnement définie est donnée, et **en ce que** la vérification de la condition de fonctionnement définie permet d'identifier au moins une indisponibilité temporaire d'un groupe moteur du système d'entraînement.

2. Unité d'affichage (1 ; 2 ; 3) selon la revendication 1, **caractérisée en ce que** l'unité de commande est configurée de telle sorte que dans un véhicule automobile doté d'un système d'entraînement à moteur électrique, l'autonomie restante (RW_E) est masquée indépendamment de la réserve d'énergie électrique si une condition de fonctionnement définie est donnée qui permet de conclure au moins à une indisponibilité temporaire de l'accumulateur haute tension.

3. Unité d'affichage (1 ; 2 ; 3) selon l'une quelconque des revendications précédentes, **caractérisée en ce que** l'unité de commande est configurée de telle sorte que dans un véhicule automobile doté d'un système d'entraînement à moteur à combustion interne, l'autonomie restante (RW_V) est masquée indépendamment de la réserve d'énergie concernant le carburant si une condition de fonctionnement définie est donnée qui permet de conclure au moins à une indisponibilité temporaire d'un groupe moteur du système d'entraînement à moteur à combustion interne.

4. Unité d'affichage (1 ; 2 ; 3) selon l'une quelconque des revendications précédentes, **caractérisée en ce que** l'unité de commande est configurée de telle sorte que dans un véhicule automobile doté d'un système d'entraînement par pile à combustible, l'autonomie restante est masquée indépendamment de la réserve d'énergie concernant la pile à combustible si une condition de fonctionnement définie est donnée qui permet de conclure au moins à une indisponibilité temporaire d'un groupe moteur du système d'entraînement par pile à combustible.

5. Unité d'affichage (1 ; 2 ; 3) selon l'une quelconque des revendications précédentes, **caractérisée en ce que** l'unité de commande est configurée de telle sorte que dans un véhicule automobile doté d'au moins deux systèmes d'entraînement, à la fois chaque autonomie restante individuelle (RW E, RW_V) de chaque système d'entraînement et l'autonomie restante globale (RW_G) sont affichées, et **en ce que** comme autonomie restante globale (RW_G), la somme des autonomies restantes individuelles (RW_E, RW_V) non masquées est spécifiée.
